# EUROPEAN PATENT APPLICATION

(11) **EP 4 485 434 A1**
(43) Date of publication of application: **01.01.2025**
(21) Application number: 24181338.5
(22) Date of filing: 11.06.2024
(51) Int. Cl.: G09F 9/33, G09F 13/14

(54) **DISPLAY APPARATUS AND ELECTRONIC INSTRUMENT**

(30) Priority: 26.06.2023 JP 2023103886
(71) Applicant: CASIO COMPUTER CO., LTD., Shibuya-ku, Tokyo 151-8543 (JP)
(72) Inventor: Nakajima, Yuuki, Hamura-shi, Tokyo, 205-8555 (JP); Fukushima, Shingo, Hamura-shi, Tokyo, 205-8555 (JP); Sakai, Otoya, Hamura-shi, Tokyo, 205-8555 (JP)
(74) Representative: Grünecker Patent- und Rechtsanwälte PartG mbB

(57) **Abstract**

A display apparatus (40) comprises at least one light source (72), a light guiding unit (60) configured to have an incident surface (64b1) on which light from the at least one light source (72) is incident, an emitting surface (64a1) from which light from the at least one light source (72) is emitted, and at least one intermediate surface (64c, 64d) positioned between the incident surface (64b1) and the emitting surface (64a1), and a light shielding unit (50) configured to have an inner wall surface (58a3, 58a4) facing a side of at least a part of the at least one intermediate surface (64c, 64d) and at least one continuous surface (50C1, 50C2) facing a side of the emitting surface (64a1) and continuing from the inner wall surface (58a3, 58a4) in a direction in which the at least one continuous surface (50C1, 50C2) extends away from the at least one intermediate surface (64c, 64d).

## Description

### CROSS-REFERENCE TO RELATED APPLICATION

This application is based upon and claims the benefit of priority under 35 USC 119 of Japanese Patent Application No. 2023-103886 filed on June 26, 2023, the entire disclosure of which, including the specification, claims, drawings and abstract, is incorporated herein by reference in its entirety.

### BACKGROUND

### TECHNICAL FIELD

The present disclosure relates to a display apparatus and an electronic instrument.

### Description of the Related Art

There have conventionally been known display apparatuses including a light guiding unit for guiding light from a light source which is incident on an incident surface to make the light emitted from an emitting surface which lies opposite to the incident surface. For example, Japanese Unexamined Patent Application Publication No. 2007-127909 (JP-A-2007-127909) discloses an LED display as a display apparatus which includes multiple LEDs (Light Emitting Devices) as multiple light sources, and a light guiding unit for guiding lights from the multiple LEDs. In this LED display, a light receiving surface (an incident surface) is provided on an end face of the light guiding unit which faces the LEDs, and a display surface (an emitting surface) is provided on an end face of the light guiding unit which lies opposite to the light receiving surface in such a manner as to be parallel to the light receiving surface. An outer circumferential edge of the LED display is covered by a display panel (a case unit).

### [Technical Problem]

With the display apparatus disclosed in JP-A-2007-127909, there may be occurring a case in which a desired display cannot easily be attained as a result of diffusion of light from a light source.

The present disclosure advantageously provides a display apparatus for performing a good display and an electronic instrument including the display apparatus.

### [Effect of the Disclosure]

According to the present disclosure, the display apparatus for performing a good display and the electronic instrument including the display apparatus can be provided.

### SUMMARY

According to an aspect of the present disclosure, there is provided a display apparatus comprising at least one light source, a light guiding unit configured to have an incident surface on which light from the at least one light source is incident, an emitting surface from which light from the at least one light source is emitted, and at least one intermediate surface positioned between the incident surface and the emitting surface, and a light shielding unit configured to have an inner wall surface facing a side of at least a part of the at least one intermediate surface and at least one continuous surface facing a side of the emitting surface and continuing from the inner wall surface in a direction in which the at least one continuous surface extends away from the at least one intermediate surface.

According to another aspect of the present disclosure, there is provided an electronic instrument including the display apparatus described above, configured to display information related to playing of the electronic instrument.

### BRIEF DESCRIPTION OF THE DRAWINGS

FIG. 1 is an overall perspective view of an electronic keyboard instrument according to an embodiment of the present disclosure as viewed from a front side;
FIG. 2 is a perspective view of a main body part of the electronic keyboard instrument according to the embodiment as viewed from the front side;
FIG. 3 is an exploded perspective view of a display apparatus, an insulating sheet, and a metallic sheet according to the embodiment;
FIG. 4 is a perspective view of a light shielding case of the display apparatus according to the embodiment as viewed from the front side;
FIG. 5 is a perspective view of the light shielding case of the display apparatus according to the embodiment as viewed from a back side;
FIG. 6 is a perspective view of a light guiding unit of the display apparatus according to the embodiment as viewed from the front side;
FIG. 7 is a front view of the light shielding case, the light guiding unit and an LED substrate of the display apparatus, the insulating sheet, and the metallic sheet according to the embodiment; and
FIG. 8 is a vertical sectional view showing the light shielding case, the light guiding unit and the LED substrate of the display apparatus, the insulating sheet, and the metallic sheet according to the embodiment, which is a sectional view of a section taken along a line VIII-VIII in FIG. 7.

### DESCRIPTION OF THE EMBODIMENT

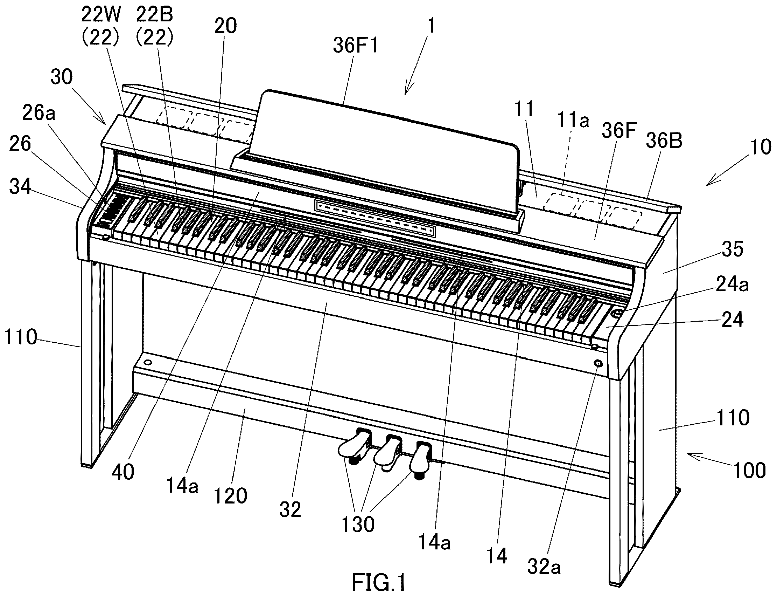

Referring to drawings, an embodiment of the present disclosure will be described. An electronic keyboard instrument (an electronic instrument) 1 shown in FIG. 1 includes a main body part 10 and a leg part 100. As shown in FIG. 1, the main body part 10 includes a keyboard 20 and a main body case (a casing) 30 which encompasses the keyboard 20 to hold it. The keyboard 20 has a plurality of keys (operators) 22 made up of white keys 22W and black keys 22B, whose key press sections are disposed in such a manner as to be exposed. The leg part 100 includes a pair of side plates 110, a pedal frame 120 and a pedal device 130. In the following description, an alignment direction of the plurality of keys 22 of the keyboard 20 is referred to as a left-right direction (in FIG. 1, a direction towards a left side is referred to as a leftward direction), an extending direction of each key 22 is referred to as a front-back direction (in FIG. 1, a direction towards a nearer side is referred to as a forward direction, and a farther side is referred to as a backward direction), and an upper-lower direction of the electronic keyboard instrument 1 is referred to as an upper-lower direction (in FIG. 1, a direction towards an upper side is referred to as an upward direction, and a direction towards a lower side is referred to as a downward direction).

As shown in FIG. 1, the pair of side plates 110 are component plates which are erected on a setting surface on both left and right sides of the electronic keyboard instrument 1 in such a posture that both plate surfaces of each of the component plates are oriented in the left-right direction so as to support the main body case 30. The pedal frame 120 extends between the side plates 110 to connect them together at respective lower sides of the side plates 110. The pedal device 130 is provided at a substantially central portion of the pedal frame 120 in the left-right direction. In the electronic keyboard instrument 1, the main body case 30 of the main body part 10 and the two side plates 110 of the leg part 100, which are both exposed to an exterior of the electronic keyboard instrument 1, are made of wood, and this features the quality of the electronic keyboard instrument 1.

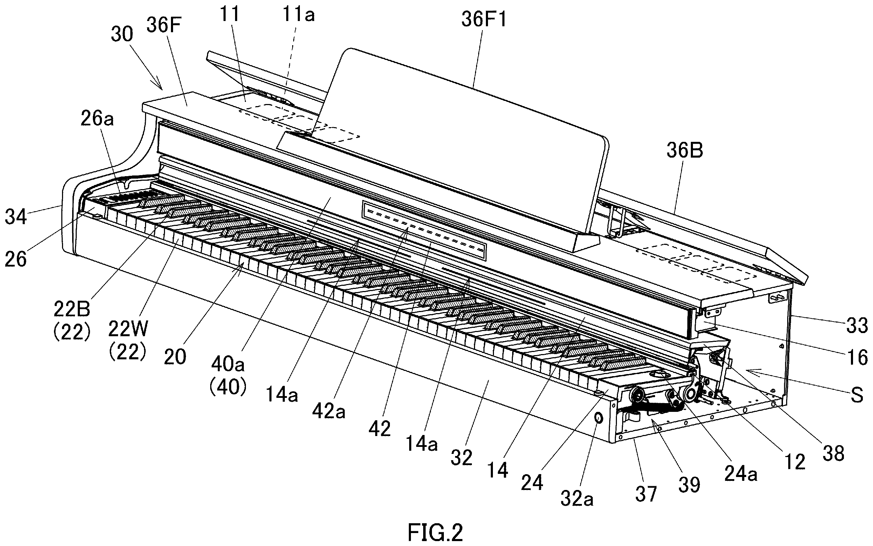

As shown in FIGS. 1 and 2, when viewed from an upper side and a lower side thereof, the main body case 30 has a laterally elongated, substantially rectangular shape in which a longitudinal direction thereof follows the left-right direction and has thick component plates such as a front plate 32, a back plate 33, a left side arm plate 34, a right side arm plate 35, a front top plate 36F, a back top plate 36B, and a lower plate 37. In addition, the main body case 30 is given a vertical section of substantially an L-shape when viewed from the leftward direction. Here, in FIG. 2, the main body case 30 is shown being in a state in which the left side arm plate 34 is removed. The front plate 32 has a substantially rectangular shape which is elongated in the left-right direction. Then, the front plate 32, having a substantially rectangular shape which is elongated in the left-right direction, constitutes a lower portion of a front end portion of the main body part 10 and constitutes a front surface of the main body case 30 on a lower side of the keyboard 20. A power supply button 32a for switching on and off the electronic keyboard instrument 1 is provided at a right end portion of the front plate 32. The back plate 33 has a substantially rectangular shape which is elongated in the left-right direction and is provided behind the main body part 10, constituting a back surface of the main body case 30.

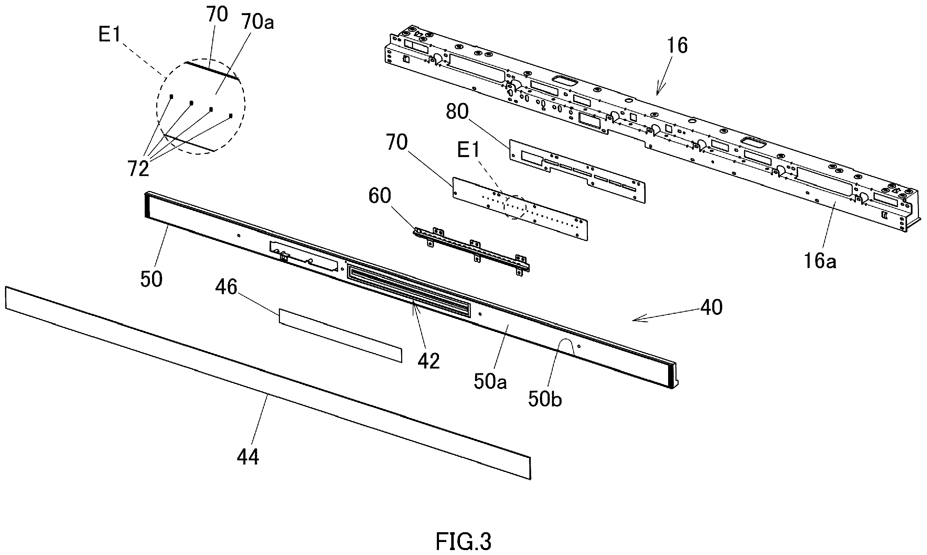

The left side arm plate 34 and the right side arm plate 35 each have a substantially rectangular shape which is elongated in the front-back direction. In each of the left side arm plate 34 and the right side arm plate 35, A step is provided at a substantially central portion in the front-back direction so that the height of a front half portion becomes substantially equal to the height of the keyboard 20. The left side arm plate 34 and the right side arm plate 35 are provided individually at a left side and a right side of the main body part 10, constituting a left side surface and a right side surface of the main body case 30, respectively. The front top plate 36F has a substantially rectangular shape which is elongated in the left-right direction and is provided on a front-side portion of an upper backward section of the main body part 10, constituting a part of an upper surface of the main body case 30. The back top plate 36B has a substantially rectangular shape which is elongated in the left-right direction and is provided on a back-side portion of the upper backward section of the main body part 10, constituting another part of the upper surface of the main body case 30. Here, as shown in FIGS. 1 and 3, a volume panel 24 on which a volume knob 24a for controlling the volume of an output sound from a loudspeaker and the like are disposed is provided between the keyboard 20 and the right side arm plate 35. In addition, a setting panel 26 on which various types of setting buttons 26a and the like are disposed is provided between the keyboard 20 and the left side arm plate 34.

The back top plate 36B is attached rotatably to the back plate 33 in such a manner that the back plate 33 is opened from a front side thereof. A cover plate 11, having a substantially rectangular plate-like shape which is elongated in the left-right direction, is provided on a lower side of the back top plate 36B in such a posture that both plate surfaces thereof are oriented in the upper-lower direction. A plurality of upper openings 11a, each having a substantially rectangular shape and opened upwards, are provided in the cover plate 11 in such a manner as to be disposed at predetermined intervals in the left-right direction. An upper surface and side surfaces of the cover plate 11 are covered with a saran net. With the back top plate 36B left open, an opening on a lower side of the back top plate 36B is covered by the cover plate 11, so that an interior of the main body case 30 is made invisible. In addition, a music stand 36F1 is attached to a substantially central portion of the front top plate 36F in the left-right direction thereof. The lower plate 37 has a substantially rectangular shape which is elongated in the left-right direction and is provided on a lower side of the main body part 10, constituting a lower surface of the main body case 30.

As shown in FIG. 2, a console unit 12, having a substantially rectangular plate-like shape which is elongated in the left-right direction, is provided at back sides of the keys 22 of the keyboard 20 in such a posture that both plate surfaces thereof are oriented in the upper-lower direction. The console unit 12 is provided in a position where the console unit 12 is superposed on a front end portion of the front top plate 36F in the upper-lower direction in such a manner as to cover back end portions of the keys 22 of the keyboard 20. Various types of switches are provided on a frontal surface of the console unit 12. Then, the console unit 12 prevents the interior of the main body case 30 from becoming visible via a gap at a back end portion of the keyboard 20 from an exterior of the electronic keyboard instrument 1. A key press mechanism 39 is provided in a space defined between the keyboard 20 and the lower plate 37 to realize a key press feeling and tones which are close to those provided by a real piano when the player presses the keys 22 of the keyboard 20.

As shown in FIG. 2, the main body part 10 includes a key cover 38 for covering the section of the keyboard 20 which is exposed to the outside. The key cover 38 can be folded into two sections via a hinge and is accommodated in a space defined on a back side of the key press mechanism 39 in the interior of the main body case 30 in such a manner as to freely be pushed into and pulled out of the space. A hand-held unit 14, constituting a hand-held section of the key cover 38, is provided between a front end portion of the key cover 38 and the console unit 12. Two laterally elongated, substantially rectangular sound releasing holes 14a are provided individually in portions of the hand-held unit 14 which lie closer to a center thereof in such a manner as to be opened to penetrate the hand-held unit 14. Additionally, a loudspeaker, not shown, is provided in a space S defined on a back side of the key cover 38 in such a state that the key cover 38 is accommodated within the main body case 30 (a state shown in FIG. 2). The loudspeaker is configured to emit a sound which is realized by the key press mechanism 39.

A metallic sheet 16 is attached to a lower surface of the front top plate 36F in such a manner as to extend in the left-right direction (refer to FIGS. 2 and 3). The metallic sheet 16 is formed substantially into a stepped structure from a front lower side to a back upper side. A display unit (a display apparatus) 40, having a thick substantially rectangular plate-like shape which is elongated in the left-right direction, is attached to a front end portion of a lower step of the metallic sheet 16 of the substantially stepped structure in such a posture that a display surface thereof is oriented to the front. The display unit 40 is provided between the key cover 38 and the front top plate 36F while being disposed in such a manner as to define a gap, which is opened towards the front side, individually on upper and lower sides thereof. In the electronic keyboard instrument 1, sound emitted from the loudspeaker provided within the main body case 30 is designed to be released to the exterior of the main body case 30 by way of at least one of four sound releasing paths of a sound releasing path passing through interspaces between the keys 22 of the keyboard 20, a sound releasing path passing through the sound releasing holes 14a, a sound releasing path passing through the gaps opened on the upper and lower sides of the display unit 40, and a sound releasing path passing through the upper openings 11a.

Next, the operation/working-effect and configuration of the display unit 40, which constitutes a main part of the present disclosure, will be described in detail. As shown in FIG. 2, a display section 42 is provided at a substantially central portion of a front surface 40a of the display unit 40 in the left-right direction. This display section 42 has a substantially rectangular shape which is elongate in the left-right direction and is configured to display information related to the playing of the electronic keyboard instrument 1. When referred to here, displaying information related to the playing means displaying, for example, a metronome function or a magnitude of a key press value of the key 22 when the key 22 is pressed by the player. A display area 42a is provided at a central portion of the display section 42, and this display area 42a is configured to be illuminated by lights from a plurality of LEDs 72 (refer to FIG. 3) which are each a light emitting device. The LEDs 72 will be described later. The plurality of LEDs 72 are aligned along the left-right direction, and arbitrary LEDs 72 in the plurality of LEDs 72 are turned on and off.

When the display section 42 displays a metronome function, firstly, in the plurality of LEDs 72, some successive LEDs 72 are turned on to be illuminated as a mass of illuminated LEDs, while the other LEDs 72 are left turned off to be unilluminated. Here, according to a set tempo, in the illuminated LEDs 72, the LED 72 positioned at one end in the left-right direction (for example, at a left end) is turned off, and in the unilluminated LEDs 72, the LED 72 positioned adjacent to the illuminated LED 72 at the other end in the left-right direction (for example, a right end) is turned on, so that the same number of successive LEDs 72 are always illuminated all together. Hereafter, this series of turning-on and turning-off operations is repeated, and when there is left no more unilluminated LEDs 72 at the other end side of the mass of illuminated LEDs, the illuminated LED 72 at the other end of the mass of illuminated LEDs is turned off, and the unilluminated LED 72 positioned adjacent to the illuminated LED 72 of the mass of illuminated LEDs which is positioned at the one end is turned on, and thereafter, this series of turning-on and turning-off operations is repeated. That is, some successive illuminated LEDs 72 are seen as if performing a reciprocating motion repeatedly in the left-right direction in the display area 42a to the set tempo, whereby the metronome function is realized.

As shown in FIG. 3, the display unit 40 includes, sequentially from the front side, an acryl panel 44, a diffusing sheet 46, a light shielding case (a light shielding unit) 50, a light guiding unit 60, and an LED substrate (a substrate) 70. The insulating sheet 80 is disposed behind the LED substrate 70. The metallic sheet 16 described above is disposed behind the insulating sheet 80. The acryl panel 44 is a transparent component panel of a substantially rectangular plate-like shape which is elongated in the left-right direction and is disposed in such a posture that a display surface is oriented to the front, constituting a front surface 40a (refer to FIG. 2) of the display unit 40. The diffusing sheet 46 is a laterally elongated, substantially rectangular component sheet which is shaped and sized so as to match the display section 42. The diffusing sheet 46 is formed of PET (polyethylene terephthalate) and has a light diffusing characteristic. The diffusing sheet 46 is affixed to a part of a front surface 50a of the light shielding case 50 which corresponds to the display section 42.

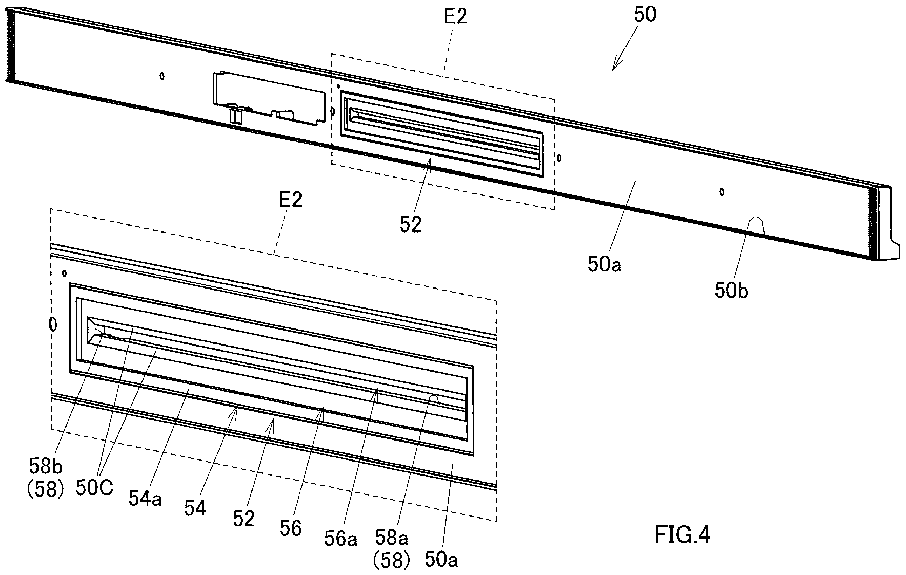

As shown in FIGS. 3 to 5, the light shielding case 50 is a substantially rectangular plate-like component elongated in the left-right direction. The light shielding case 50 is formed of, for example, polystyrene containing black coloring matters and has a light shielding characteristic. The light shielding case 50 is disposed in such a posture that two case surfaces including the front surface 50a are oriented in the front-back direction. In the front surface 50a of the light shielding case 50, an outer edge portion 50b lying along an outer edge of the front surface 50a slightly protrudes further towards the front side than the front surface 50a, whereby a substantially concavely recessed portion in the front surface 50a is surrounded by the outer edge portion 50b in such a manner as to be opened towards the front side. The acryl panel 44 is fitted in the substantially concavely recessed portion in the front surface 50a. As shown in an enlarged view E2 in FIG. 4, a laterally elongated, substantially rectangular frame 52, whose shape matches that of the display section 42, is provided on the front surface 50a of the light shielding case 50 in a position corresponding to the display section 42.

A first stepped front surface section (a front surface section) 54 is provided inside the frame 52 in such a manner as to be recessed or lowered in a stepped fashion further backwards than the front surface 50a of the light shielding case 50 into a slightly recessed frame configuration. A second stepped front surface section (the front surface section) 56 is provided inside the first stepped surface section 54 in such a manner as to be recessed or lowered in a stepped fashion further backwards than the first stepped front surface section 54. In this way, the front surface 50a in which the frame 52 having the first stepped front surface section 54 and the second stepped front surface section 56 is provided and the outer edge portion 50b function as a light shielding unit having a light shielding characteristic.

A laterally elongated, substantially rectangular emission opening 56a is provided in a position on the second stepped front surface section 56 which corresponds to the display area 42a (refer to FIG. 2). This emission opening 56a is opened to follow in the front-back direction and is configured such that a part of the light guiding unit 60 is inserted thereinto so as to cause lights from the LEDs 72 to be emitted therefrom. Speaking specifically, the emission opening 56a is provided in such a manner as to be formed into a rectangular shape in which a longitudinal direction thereof follows along the left-right direction. The diffusing sheet 46 described above is affixed to the first stepped front surface section 54. An affixing area (an attaching area) 54a to which the diffusing sheet 46 is configured to be affixed is provided around the emission opening 56a in the first stepped front surface section 54.

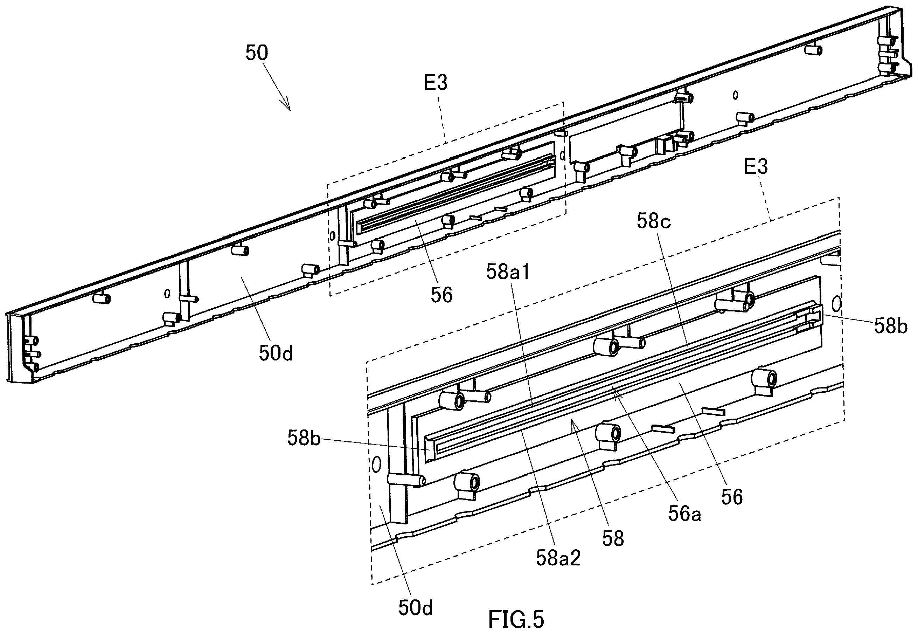

As shown in an enlarged view E3 in FIG. 5, a cylindrical wall section 58 is provided on a back side of the emission opening 56a on a back surface 50d of the light shielding case 50 in such a manner as to extend from an opening end of the emission opening 56a towards the back side into an angular cylindrical configuration. The cylindrical wall section 58 is provided in such a manner as to extend substantially perpendicularly to the front surface 50a of the light shielding case 50. The cylindrical wall section 58 includes a pair of upper and lower walls 58a (an upper wall 58a1, a lower wall 58a2), which are positioned relatively upper and lower to thereby constitute upper and lower walls, and a pair of left and right walls 58b, which are positioned relatively left and right to thereby constitute left and right walls. Here, as shown in FIG. 5, inner surfaces of the left and right walls 58b are caused to slope slightly outwards in the upper-lower direction from the back side to the front side.

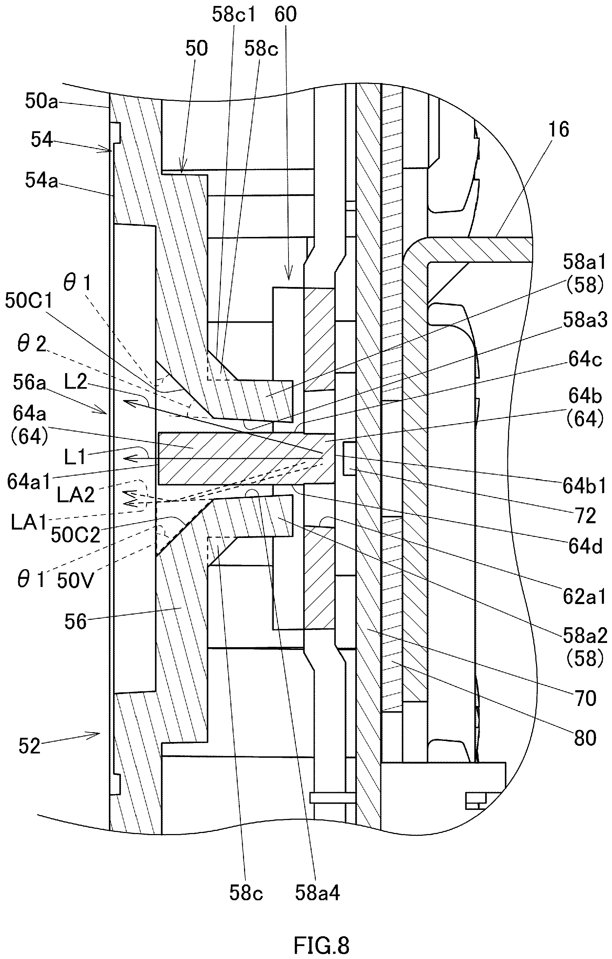

As shown in the enlarged view E2 in FIG. 4 and FIG. 8, boundary portions between the second stepped front surface section 56 and the upper and lower walls 58a of the cylindrical wall section 58 are C chamfered, whereby sloping surfaces (continuous surfaces) 50c (a first sloping surface 50C1, a second sloping surface 50C2) are provided in such a manner as not only to slope relative to a front surface of the second stepped front surface section 56 but also to slope relative to inner wall surfaces of the upper and lower walls 58a. The sloping surfaces 50C continue from an inner wall surface 58a3 of the upper wall 58a1 and an inner wall surface 58a4 of the lower wall 58a2 in directions in which the sloping surfaces 50C extend away, respectively, from an upper surface 64a and a lower surface 64d of a second component plate 64 of the light guiding unit 60.

In other words, the first sloping surface 50C1 is provided in such a manner as to slope from the inner wall surface 58a3 of the upper wall 58a1 to an opening end of the emission opening 56a, and the second sloping surface 50C2 is provided in such a manner as to slope from the inner wall surface 58a4 of the lower wall 58a2 to the opening end of the emission opening 56a. The first sloping surface 50C1 faces the opening end or edge of the emission opening 56a above the upper surface 64c of the second component plate 64, which will be described later, in the upper-lower direction, and the second sloping surface 50C2 faces the opening end or edge of the emission opening 56a below the lower surface 64d of the second component plate 64, which will be described later, in the upper-lower direction. The sloping surfaces 50C constitute sloping surfaces which slope backwards and inwards (towards the emission opening 56a) from the second stepped front surface section 56 towards the upper and lower walls 58a.

Specifically speaking, assuming that an axial direction of an imaginary axis extending along a front surface of the second stepped front surface section 56 in the upper-lower direction is 0 degree and that an axial direction of an imaginary axis extending in the backward direction is 90 degrees, the first sloping surface 50C1 and the second sloping surface 50C2 slope in such a manner that an angle Θ1 (refer to FIG. 8) formed relative to the front surface of the second stepped front surface section 56 becomes substantially 45 degrees. Then, the first sloping surface 50C1 slopes in such a manner that an angle Θ2 formed relative to the inner wall surface 58a3 of the upper wall 58a1 becomes substantially 45 degrees, and the second clopping surface 50C2 slopes in such a manner that an angle Θ2 formed relative to the inner wall surface 58a4 of the lower wall 58a2 becomes substantially 45 degrees. Additionally, as shown in FIG. 8, as viewed from the front, the first sloping surface 50C1 and the second sloping surface 50C2 are provided from positions on the second stepped front surface section 56 which do not overlap the affixing area 54a to the upper and lower walls 58a, respectively.

In this way, the first sloping surface 50C1 slopes relative to the inner wall surface 58a3 of the upper wall 58a1 in such a manner as to expand in the upward direction relative to the inner wall surface 58a3 of the upper wall 58a1, that is, in such a manner as to extend away from the upper surface 64c of the second component plate 64 as the first sloping surface 50C1 extends over the upper surface 64c from a position lying closer to an incident surface 64b1 towards a position lying closer to an emitting surface 64a1 of the second component plate 64. Then, the second sloping surface 50C2 slopes relative to the inner wall surface 58a4 of the lower wall 58a2 in such a manner as to expand in the downward direction relative to the inner wall surface 58a4 of the lower wall 58a2, that is, in such a manner as to extend away from the lower surface 64d of the second component plate 64 as the second sloping surface 50C2 extends under the lower surface 64d from a position lying closer to the incident surface 64b1 towards a position lying closer to the emitting surface 64a1 of the second component plate 64. Here, the inner wall surfaces of the upper and lower walls 58a may be designed such that distances defined between the inner wall surfaces and the corresponding opposite surfaces of the second component plate 64 increase slightly as the inner wall surfaces extend in the forward direction relative to the incident surface 64b1. In other words, the inner wall surface 58a3 of the upper wall 58a1 and the inner surface 58a4 of the lower wall 58a2 may slope in such a manner that angles formed relative to the front surface of the second stepped front surface section 56 become less than 90 degrees.

Returning to the description of the constituent components making up the display unit 40, as shown in FIG. 3, the LED substrate 70 is a laterally elongated, substantially rectangular component plate having a shape corresponding to that of the display section 42 and is sized one size larger than the display section 42. Two main surfaces of the LED substrate 70 including a front surface 70a are oriented in the front-back direction. As shown in an enlarged view E1 in FIG. 3, the plurality of LEDs (light sources) 72 are provided on the front surface 70a of the LED substrate 70 in a central position in the upper-lower direction. The plurality of LEDs 72 are disposed side by side at equal intervals along the left-right direction (a first direction), and substantially rectangular light emitting surfaces thereof are oriented towards the front side. In the present embodiment, 20 (twenty) LEDs 72 are provided on the LED substrate 70. The insulating sheet 80 is a laterally elongated, substantially rectangular component sheet having a shape corresponding to that of the LED substrate 70 and sized one size larger than the LED substrate 70. This component sheet has an insulating characteristic. The insulating sheet 80 is held between the LED substrate 70 and the metallic sheet 16 to thereby prevent the occurrence of a short-circuit between the LED substrate 70 and the metallic sheet 16.

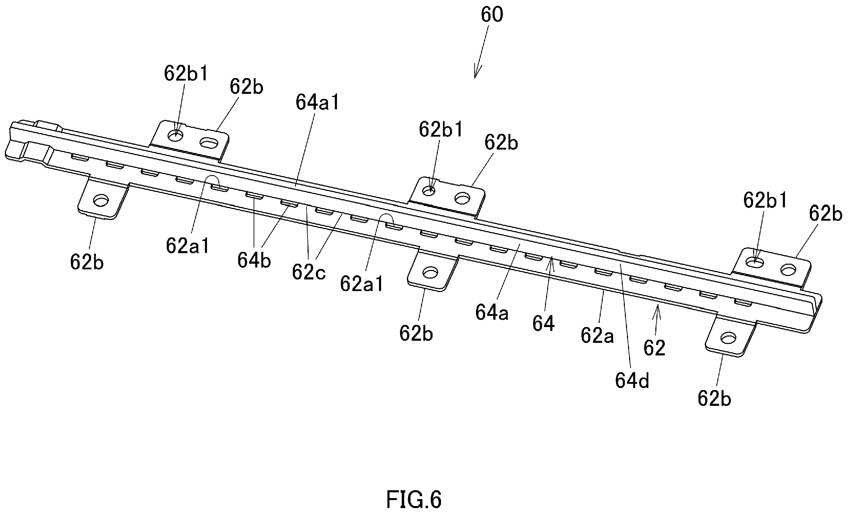

As shown in FIG. 6, the light guiding unit 60 is formed from polycarbonate or acryl having a superior light transmitting characteristic and has a first component plate 62 and the second component plate 64. The first component plate 62 is a laterally elongated, substantially rectangular component plate and is disposed in such a posture that two plate surfaces thereof are oriented in the front-back direction. Then, a dimension of the first component plate 62 in the left-right direction is substantially equal to a dimension of the emission opening 56a in the left-right direction. The first component plate 62 is disposed to be superposed on the front surface 70a of the LED substrate 70 in such a manner that the plate surfaces thereof are substantially parallel to the main surfaces of the LED substrate 70.

The first component plate 62 includes a plate section 62a which constitutes the plate surfaces of the first component plate 62, a plurality of protruding sections 62b which are slightly lowered in a step-like fashion from external edge portions of longitudinal sides of the plate section 62a towards the back side and are caused to protrude outwards (in the upward direction or the downward direction) into substantially rectangular shapes, and support sections 62c which are coupled integrally to the second component plate 64 to thereby prevent the deformation or separation of the second component plate 64. The first component plate 62 functions as a support for supporting the second component plate 64. The first component plate 62 and the second component plate 64 are both formed integrally from the same material, and hence, the first component plate 62 and the second component plate 64 can be fabricated together more easily than molding separate components together by causing them to correspond exactly in position.

A plurality of openings (hereinafter, referred to as "LED openings 62a1"), which are each opened into a substantially rectangular shape, are provided in the plate section 62a of the first component plate 62 in such a manner as to penetrate the plate section 62a in the front-back direction above and below positions corresponding individually to the plurality of LEDs 72 in such a state that the first component plate 62 is superposed on the front surface 70a of the LED substrate 70. The plurality of LED openings 62a1 work in pairs as a set or pair of LED openings 62a1 and are disposed in such a manner as to face each other in the upper-lower direction (a second direction) while positioning one LED 72 therebetween. Each LED opening 62a1 is opened in a larger size than a light emitting surface of each LED 72.

A screw hole 62b1 is provided in each protruding section 62b of the first component plate 62 for a screw with which the light guiding unit 60 is screw fastened to a front end portion 16a of the metallic sheet 16 in such a state that the LED substrate 70 and the insulating sheet 80 are held between the light guiding unit 60 and the metallic sheet 16. In the first component plate 62, the support sections 62c are provided individually at portions where no LED opening 62a1 is provided in the left-right direction. The first component plate 62 is a component which supports the second component plate 64 which protrudes to the front. The second component plate 64 has a characteristic of easily transmitting light to a component which is in contact with the second component plate 64, and hence, the first component plate 62 supports the second component plate 64 at the support sections 62c in such a manner that the second component plate 64 is brought into contact as little as possible with other components than the first component plate 62.

The second component plate 64 is a thick laterally elongated, substantially rectangular component plate and is disposed in such a posture that two plate surfaces thereof are oriented in the upper-lower direction, that is, in such a state that the second component plate 64 stands at right angles with respect to the plate section 62a of the first component plate 62. In addition, dimensions in the upper-lower direction and the left-right direction of the second component plate 64 are made slightly smaller than dimensions in the upper-lower direction and the left-right direction of the emission opening 56a. The second component plate 64 is disposed in such a manner that the two plate surfaces thereof become substantially perpendicular to the main surfaces of the LED substrate 70 in such a state that the first component plate 62 is superposed on the front surface 70a of the LED substrate 70. The second component plate 64 includes a light guiding on 64a and a light receiving section 64b which constitute plate surfaces of the second component plate 64. The light guiding section 64a is positioned at a front portion of the second component plate 64 to guide lights from the LEDs 72. The light receiving section 64b is positioned at a back portion of the second component plate 64 and is disposed in such a manner as to face the light emitting surfaces of the LEDs 72 to receive lights from the LEDs 72. Each LED opening 62a1 is opened in the front-back direction on upper and lower sides of the light receiving section 64b.

As shown in FIG. 8, a front end face (a top surface) of the light guiding section 64a of the second component plate 64 constitutes an emitting surface 64a1 from which lights from the LEDs 72 are configured to be emitted. On the other hand, a back end face of the light receiving section 64b constitutes an incident surface 64b1 on which lights from the LEDs 72 are configured to be incident. In the second component plate 64, the incident surface 64b1 and the emitting surface 64a1 constitute opposite sides and are both provided into a rectangular shape in which a longitudinal direction follows the left-right direction. The incident surface 64b1 is level with a back surface (a rear surface) of the plate section 62a of the first component plate 62. In this way, the first component plate 62 and the second component plate 64 are provided in such a manner that the incident surface 64b1 extends along the left-right direction between the pairs of upper and lower LED openings 62a1.

In such a state that the light guiding unit 60 is attached to the metallic sheet 16 together with the LED substrate 70 and the insulating sheet 80, when viewed from the front side, the LEDs 72 are concealed behind the second component plate 64 of the light guiding unit 60. Here, the upper surface 64c (an intermediate surface) and the lower surface 64d (the intermediate surface) of the second component plate 64 are made into a smooth surface which is smoother than the incident surface 64b1 and the emitting surface 64a1. As a result, the upper surface 64c and the lower surface 64d of the second component plate 64 reflect light propagated inside the light guiding section 64a more than the emitting surface 64a1, and hence, the propagated light cannot easily be made to emit from the upper surface 64c and the lower surface 64d of the second component plate 64 to the outside of the light guiding section 64a.

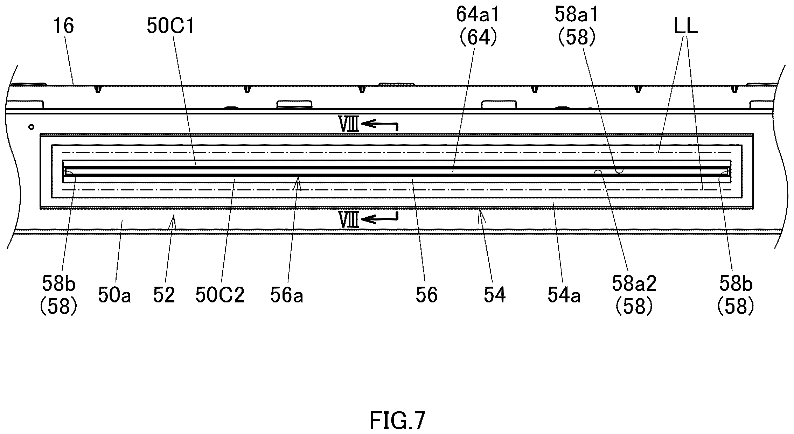

Here, a form of disposition of the light guiding unit 60 and the light shielding case 50 of the display unit 40 will be described. As shown in FIGS. 7 and 8, in such a state that the light guiding unit 60 and the light shielding case 50 are attached to the metallic sheet 16, the light guiding section 64a is accommodated inside the cylindrical wall section 58 with the emitting surface 64a1 exposed from the emission opening 56a, the two upper and lower plate surfaces of the second component plate 64 are disposed close individually to the corresponding walls of the pair of upper and lower walls 58a, and the right side surface and the left side surface of the second component plate 64 are disposed close individually to the pair of left and right walls 58b of the cylindrical wall section 58. In the consequence of this, substantially all areas of an outer circumferential surface of the second component plate 64 excluding the emitting surface 64a1 and the incident surface 64b1 of the second component plate 64 are covered by the light shielding case 50, whereby light is shielded in the light shielding case 50. As a result, when lights from the individual LEDs 72 are incident on the incident surface 64b1 and are caused to be emitted from the emitting surface 64a1, it is seen from the front side of the electronic keyboard instrument 1 that only the display area 42a is illuminated by the function of the sloping surfaces 50C, which will be described later.

As shown in FIG. 8, a thick section (a back surface section) 58c is provided at a boundary portion between the second stepped front surface section 56 and the cylindrical wall section 58 on an opposite side to a side facing the two plate surfaces of the second component plate 64 (in other words, a back side of a side where the sloping surfaces 50C are provided) by increasing a thickness thereat. A surface 58c1 of the thick section 58c constitutes a surface parallel to the sloping surface 50C. In the consequence of this, in the cylindrical wall section 58, the thickness of a portion where the sloping surface 50C is provided is made substantially equal to the thickness of a portion where the sloping surface 50C is not provided, this ensuring the strength of the sloping surface 50C.

Next, optical paths of lights emitted from the individual LEDs 72 provided on the LED substrate 70 will be described. As shown in FIG. 8, lights emitted from the individual LEDs 72 are incident on the incident surface 64b1 of the second component plate 64, and most of the lights are guided inside the second component plate 64 to reach the emitting surface 64a1. On the other hand, a part of the lights which are incident on the incident surface 64b1 of the second component plate 64 travels from the inside of the second component plate 64 towards the outside of the second component plate 64 via the upper surface 64c or the lower surface 64d of the second component plate 64.

Another part of the lights which are incident on the incident surface 64b1 continues to travel in a straight line towards the front and is caused to be emitted towards the front side from the emitting surface 64a1 of the light guiding unit 60 (hereinafter, an optical path of light traveling in a straight line from the incident surface 64b1 to be caused to be emitted from the emitting surface 64a1 is generally referred to as a "first optical path L1".) (refer to an arrow shown in FIG. 8). As shown in FIG. 7, a further part of the lights which are incident on the incident surface 64b1 is diffused to both sides in the upper-lower direction from the incident surface 64b1 inside the light guiding section 64a to reach the upper surface 64c or the lower surface 64d of the second component plate 64. Among the light that has reached the upper surface 64c or the lower surface 64d of the second component plate 64, a part of the light is reflected internally on the two plate surfaces of the second component plate 64, while the remaining part of the light is not reflected and is eventually released from the upper surface 64c or the lower surface 64d of the second component plate 64 towards the outside of the second component plate 64.

Among the light that is released to the outside of the second component plate 64, a part of the light reaches the left and right walls 58b of the cylindrical wall section 58, and further, a part thereof is absorbed by the cylindrical wall section 58 and is not released from the display unit 40. However, there is light which is reflected from the cylindrical wall section 58 without being absorbed by the cylindrical wall section 58. Here, with a display unit of a structure in which the sloping surfaces 50C and the thick sections 58c according to the present embodiment are not provided, whereby the second stepped front surface section 56 and the upper and lower walls 58a are coupled together directly, there is caused a problem in that leaked light becomes visible not only from the emitting surface 64a1 but also from positions of regions LL indicated by alternate long and short dash lines shown in FIG. 7. In contrast with this, with the display unit 40 of the present embodiment which includes the sloping surfaces 50C and the thick sections 58c, it can be confirmed that light becomes visible properly from the emitting surface 64a1 with no leaked light becoming visible from the positions of the regions LL.

In this case, as a result of the sloping surfaces 50C being provided in the light shielding case 50, light that has leaked to the outside of the second component plate 64 in the upper-lower direction travels in a straight line without reaching the upper and lower walls 58a of the light shielding case 50, or, in other words, the light travels in a straight line without its optical path being interrupted by the upper and lower walls 58a to thereby be caused to be emitted from the emission opening 56a to the front side (hereinafter, an optical path of light that leaks to the outside of the second component plate 64 in the upper and lower direction and travels in a straight line to thereby be caused to be emitted from the emission opening 56a is generally referred to as a "second optical path L2".) (refer to an arrow shown in FIG. 8). Here, although only a second optical path L2 of light that leaks to the outside of the second component plate 64 in the upward direction is shown in FIG. 8, an optical path of light that leaks to the outside of the second component plate 64 in the downward direction is not interrupted by the upper and lower walls 58a, either, and hence, the light that so leaks also travels in a straight line similarly to thereby be caused to be emitted from the emission opening 56a. Leaked light traveling along the second optical path L2 travels while being diffused substantially radially, and hence, the leaked light does not travel towards specific positions such as the regions LL. As a result, an amount of light seen from a specific direction becomes small, and hence, light traveling along the second optical path L2 is hardly visible in reality.

Here, referring to FIG. 8, let's assume a case in which no sloping surface 50C is provided in the light shielding case 50. In this case, walls extending substantially perpendicularly from the opening end of the emission opening 56a towards the back side exist at the portions where the sloping surfaces 50C are provided (hereinafter, imaginary walls produced at the portions where the sloping surfaces 50C are provided are each referred to as an "imaginary wall 50V".). In the consequence of this, as shown in FIG. 8 by an imaginary optical path indicated by a broken line arrow (hereinafter, referred to as a "first imaginary optical path LA1") and an imaginary optical path indicated by a broken line arrow (hereinafter, referred to as a "second imaginary optical path LA2"), light that leaks to the outside of the second component plate 64 in the upper-lower direction reaches the imaginary walls 50V (reaches the upper and lower walls 58a of the light shielding case 50). Ligh traveling along the first imaginary optical path LA1 to reach the imaginary wall 50V and light traveling along the second imaginary optical path LA2 to reach the imaginary wall 50V both come together one on the other while travelling to the front side along the imaginary wall 50V and are caused to be emitted to the front side from the vicinity of the emitting surface 64a1.

Multiple lights that come together one on the other along the imaginary wall 50V in the way described above are eventually collected together to thereby be caused to be emitted from the vicinity of the emitting surface 64a1. As a result, there can be caused a problem in that unnecessary light that leaks out unintentionally becomes visible in the positions corresponding to the regions LL which are situated above and below the display area 42a when looking at the electronic keyboard instrument 1 from the front side. This situation tends to be more prominent as the length of the upper and lower walls 58a in the front-back direction increases more, because an opportunity is increased in which light is reflected on an interface between the imaginary wall 50V and a layer of air.

In contrast with this, with the electronic keyboard instrument 1 of the present embodiment, the sloping surfaces 50C are provided in the light shielding case 50, and in consequence of this, light that leaks to the outside of the second component plate 64 in the upper-lower direction travels in a straight line along the second optical path L2 without reaching the upper and lower walls 58a and is caused to be emitted to the outside of the emission opening 56a. In this way, lights emitted from the individual LEDs 72 are caused to be emitted from the emission opening 56a to the front side by way of either of the first optical path L1 and the second optical path L2. As a result, no unnecessary light that leaks out unintentionally becomes visible on the upper and lower side of the display area 42a, whereby a form of good illumination is realized in the display area 42a.

As has been described heretofore, the display unit 40 of the present embodiment includes the LEDs 72 which are light emitting devices, the light guiding unit 60 including the second component plate 64 having the incident surface 64b1 on which lights from the LEDs 72 are configured to be incident, the emitting surface 64a1 from which lights from the LEDs 72 are configured to be emitted, and the upper surface 64c and the lower surface 64d which are positioned between the incident surface 64b1 and the emitting surface 64a1, and the light shielding case 50 having the inner wall surface 58a3 and the inner wall surface 58a4 which face at least a part of the upper surface 64c and the lower surface 64d, respectively, and the sloping surfaces 50C disposed in such a manner as to face the emitting surface 64a1 and extending continuously from the inner wall surface 58a3 and the inner wall surface 58a4, respectively, in the direction in which the sloping surfaces 50C extend away from the upper surface 64c and the lower surface 64d, respectively.

In the display unit 40 of the present embodiment configured in the way described above, a part of lights emitted individually from the plurality of LEDs and incident on the incident surface 64b1 is guided inside the second component plate 64 and is caused to be emitted from the emitting surface 64a1, while the other part leaks to the outside of the second component plate 64 from the upper surface 64c or the lower surface 64d of the second component plate 64 which is the intermediate surface other than the emitting surface 64a1. Here, the opening end or edge of the emission opening 56a is chamfered, whereby the sloping surfaces 50C are provided. As a result, the optical path of light that leaks to the outside of the second component plate 64 does not constitute an optical path along which light is locally collected but constitutes the optical path along which the leaked light is diffused to be caused to be emitted from the emission opening 56a due to the light shielding case 50 having the sloping surfaces 50C.

Thus, in the display apparatus having the imaginary walls 50V which is different from the present disclosure, multiple lights that are caused to be emitted to the exterior of the light guiding unit from the other surfaces or surfaces than the emitting surface are collected by the imaginary walls 50V, as a result of which unnecessary light that leaks out unintentionally becomes visible from the outside of the emission opening 56a. In contrast with this, in the display unit 40 of the present embodiment, lights that leak to the outside of the second component plate 64 are restrained from being collected, thereby making it possible to realize a good form of illumination at the emission opening 56a. In this way, according to the present embodiment, by featuring the configuration of the light shielding case 50, a ray of light can be prevented from being seen unintentionally in the vicinity of the emission opening 56a. Thus, illumination of light and shielding of light can be made compatible with each other while realizing a good form of illumination.

In the display unit 40 according to the present embodiment, the opening end or edge of the emission opening 56a is C chamfered to produce the sloping surfaces 50C. According to this configuration, the chamfered area can be maximized while saving the space of the chamfered portion. As a result, illumination of light and shielding of light can be made compatible with each other effectively in the limited space in the vicinity of the emission opening 56a.

In the display unit 40 according to the present embodiment, the light shielding case 50 includes the second stepped front surface section 56 in which the emission opening 56a is provided and a pair of upper and lower walls 58a which extend from the opening end of the emission opening 56a in such a manner as to face the two upper and lower plate surfaces of the second component plate 64, respectively. Then, the boundary portions between the second stepped front surface section 56 and the upper and lower walls 58a are chamfered on the sides facing the second component plate 64. Further, the boundary portions between the second stepped front surface section 56 and the upper and lower walls 58a are thickened on the sides opposite to the sides facing the second component plate 64. According to this configuration, in the boundary portions between the second stepped front surface section 56 and the upper and lower walls 58a, the thickness of the portion which is chamfered to produce the sloping surface 50C can be made substantially equal to the thickness of the portion to which no chamfering is applied, whereby the strength of the portion which is chamfered to produce the sloping surface 50C can be secured.

In the display unit 40 according to the present embodiment, the diffusing sheet 46 is provided on the side of the first stepped front surface section 54 where the emitting surface 64a1 is exposed so as to diffuse light emitted from the emitting surface 64a1. The first stepped front surface section 54 includes the affixing area 54a provided around the emission opening 56a to which the diffusing sheet 46 is configured to be affixed. Then, chamfering is disposed in the position on the first stepped front surface section 54 which does not overlap the affixing area 54a. This allows to chamfer the second stepped front surface section 56 as far as to the vicinity of the affixing area 54a to produce the sloping surfaces 50C, thereby making it possible to secure the wide area to be chamfered while realizing the configuration in which the diffusing sheet is provided.

In the display unit 40 according to the present embodiment, the LED substrate 70 has the plurality of LEDs 72 which are aligned side by side in the left-right direction which extends along a longitudinal plate edge of the second component plate 64. Then, the incident surface 64b1 and the emitting surface 64a1 of the second component plate 64, and the emission opening 56a in the light shielding case 50 are each provided into the substantially rectangular shape in which the longitudinal direction follows the left-side direction. The sloping surfaces 50C produced by chamfering the second stepped front surface section 56 are provided on both the upper and lower sides of the opening end or edge of the emission opening 56a in the upper-lower direction which intersects the left-right direction substantially at right angles. According to this configuration, a ray of light can be prevented from being produced unintentionally on both the upper and lower sides of the emission opening 56a while realizing the form of illumination of the substantially rectangular shape by the plurality of LEDs 72 which are aligned side by side in the left-right direction, thereby making it possible to realize a better form of illumination.

In the display unit 40 according to the present embodiment, the upper surface 64c and the lower surface 64d of the second component plate 64 are the smooth surfaces which are smoother than the incident surface 64b1. According to this configuration, light diffused towards the upper surface 64c and the lower surface 64d inside the second component plate 64 to reach the upper surface 64c and the lower surface 64d is efficiently totally reflected on the interface with the layer of air and eventually reaches the emitting surface 64a1. In the consequence of this, light diffused inside the second component plate 64 can be caused to be emitted from the emitting surface 64a1 effectively, thereby making it possible to realize an improvement in luminance brightness.

The electronic keyboard instrument 1 according to the present embodiment includes the display unit 40 for displaying information related to the playing thereof. According to this configuration, the display unit 40 of the present embodiment which can realize the compatibility between illumination of light and shielding of light can be used as the display apparatus for displaying, for example, the metronome function or the magnitude of a key press value of a key 22 when the key 22 is pressed by the player. As a result, dim light can be shone uniformly in the left-right direction while light of a small width is being shone in the upper-lower direction, thereby making it possible to realize the electronic keyboard instrument 1 including the display unit 40 which is superior in visibility and design.

The electronic keyboard instrument 1 according to the present embodiment includes the metallic sheet 16 with which the display unit 40 is attached to the main body case 30 of the electronic keyboard instrument 1 and the insulating sheet 80 which is held in place between the LED substrate 70 and the metallic sheet 16. This can realize the configuration in which the display unit 40 can be attached strongly and rigidly to the electronic keyboard instrument 1 with the metallic sheet 16 and the occurrence of a short-circuit between the metallic sheet 16 and the LED substrate 70 can be prevented.

In the present embodiment, the sloping surfaces 50C are described as being produced by applying chamfering to the opening end or edge of the emission opening 56a, however the present disclosure is not limited thereto, and hence, as a modified example, there may be provided curved surfaces (continuous surfaces) which are curved concavely into an arc-like shape in directions in which the curved surfaces extend away, respectively, from the upper surface 64c and the lower surface 64d of the second component plate 64 by applying chamfering to the opening end or edge of the emission opening 56a. In addition, the sloping angle of the sloping surfaces 50C is described as being 45 degrees, however the present disclosure is not limited thereto as long as the sloping angle remains less than 90 degrees.

The light shielding case having the sloping surfaces 50C according to the present embodiment may be formed by chamfering (cutting, abrading, or bending) the imaginary walls 50V of the light shielding case which exist in an initial state. Alternatively, the light shielding case of the present embodiment may be molded using a mold configured to produce the sloping surfaces 50C in advance.

Here, the embodiment that has been described heretofore is presented as the example, and hence, there is no intention to limit the scope of the present invention by the embodiment. The novel embodiment can be carried out in other various forms, and various omissions, replacements, and modifications can be made thereto without departing from the spirit and scope of the present invention. Those resulting embodiments and modified examples thereof are included in the scope and gist of the present invention and are also included in the scope of inventions claimed for patent under claims below and their equivalents.

## Claims

1. A display apparatus (40) comprising:
at least one light source (72);
a light guiding unit (60) configured to have an incident surface (64b1) on which light from the at least one light source (72) is incident, an emitting surface (64a1) from which light from the at least one light source (72) is emitted, and at least one intermediate surface (64c, 64d) positioned between the incident surface (64b1) and the emitting surface (64a1); and
a light shielding unit (50) configured to have an inner wall surface (58a3, 58a4) facing a side of at least a part of the at least one intermediate surface (64c, 64d) and at least one continuous surface (50C1, 50C2) facing a side of the emitting surface (64a1) and continuing from the inner wall surface (58a3, 58a4) in a direction in which the at least one continuous surface (50C1, 50C2) extends away from the at least one intermediate surface (64c, 64d).

2. The display apparatus (40) according to claim 1,
wherein the at least one continuous surface (50C1, 50C2) is one of a sloping surface configured to slope relative to the inner wall surface (58a3, 58a4) in such a manner as to extend away from the at least one intermediate surface (64c, 64d) and a curved surface formed concavely into an arc-like shape in a direction in which the curved surface extends away from the at least one intermediate surface (64c, 64d).

3. The display apparatus (40) according to claim 2,
wherein the at least one continuous surface (50C1, 50C2) is the sloping surface,
wherein the light shielding unit (50) has a back surface section positioned on a back side of the sloping surface, and
wherein the back surface section is parallel to the sloping surface.

4. The display apparatus (40) according to any one of claims 1 to 3,
wherein the light shielding unit (50) has a front surface section (56) in which an emission opening is provided from which the emitting surface (64a1) is exposed, and
wherein the at least one continuous surface (50C1, 50C2) functions as a part of the emission opening.

5. The display apparatus (40) according to claim 4, comprising:
a diffusing sheet (46) configured to diffuse light emitted from the emitting surface (64a1),
wherein the front surface section (56) includes an attaching area (54a) to which the diffusing sheet (46) is attached, and
wherein the at least one continuous surface (50C1, 50C2) is disposed on the front surface section (56) in a position which does not overlap the attaching area (54a).

6. The display apparatus (40) according to claim 4 or 5,
wherein the at least one light source (72) comprises a plurality of light emitting devices,
wherein a substrate is provided on which the plurality of light emitting devices are disposed side by side in a first direction,
wherein the incident surface (64b1) and the emitting surface (64a1) of the light guiding unit (60), and the emission opening of the light shielding unit (50) are each provided into a substantially rectangular shape in which a longitudinal direction follows the first direction, and
wherein the at least one continuous surface (50C1, 50C2) constitutes two continuous surfaces which are disposed individually on both sides of an opening end of the emission opening in a second direction which intersects the first direction substantially at right angles.

7. The display apparatus (40) according to any one of claims 1 to 6,
wherein the at least one intermediate surface (64c, 64d) of the light guiding unit (60) constitutes smooth surfaces which are smoother than the emitting surface (64a1).

8. An electronic instrument (1) comprising:
the display apparatus (40) according to any one of claims 1 to 7; and
at least one operator (22).

9. The electronic instrument (1) according to claim 8,
wherein the display apparatus (40) is configured to display information related to playing of the electronic instrument (1).

10. The electronic instrument (1) according to claim 8 or 9, comprising:
a metallic sheet (16) configured to attach the display apparatus (40) to a casing of the electronic instrument (1); and
an insulating sheet (80) configured to be held between the display apparatus (40) and the metallic sheet (16).
